# EUROPEAN PATENT APPLICATION

(11) **EP 2 853 177 A1**
(43) Date of publication of application: **01.04.2015**
(21) Application number: 14186707.7
(22) Date of filing: 26.09.2014
(51) Int. Cl.: A47C 27/14, A47C 27/00

(54) **Configurable foam cushioning structure for providing variable support profiles in mattress components, and related mattress assemblies and methods**

(30) Priority: 27.09.2013 US 201361883645 P
(71) Applicant: Kertesz, Jozef, Raleigh, NC 27613 (US)
(72) Inventor: Kertesz, Jozef, Raleigh, NC 27613 (US)
(74) Representative: Fitchett, Stuart Paul

(57) **Abstract**

A configurable foam cushioning structure (44) for providing variable support profiles in mattress components is disclosed, and related mattress assemblies and methods. In one embodiment, a plurality of extruded support members (46) are provided each having a top surface (48) and a bottom surface (50) that extend in an extrusion direction and two end surfaces (52) that extend in a direction transverse to the extrusion direction. The extruded support members (46) are connected to each other in a linear array defining a substantially planar lower surface (66), with one end surface (52) of each of the plurality of extruded support members (46) is substantially coplanar with the lower surface (66). In this manner, the structure (44) can be easily extruded as one long, continuous piece, and reconfigured into a structure having a relatively short dimension in the extrusion direction and a relatively long dimension in the transverse direction.

## Description

### FIELD OF DISCLOSURE

The field of the disclosure relates generally to mattress assemblies, mattresses, and related methods providing support, which may be employed in bedding and seating applications.

### BACKGROUND

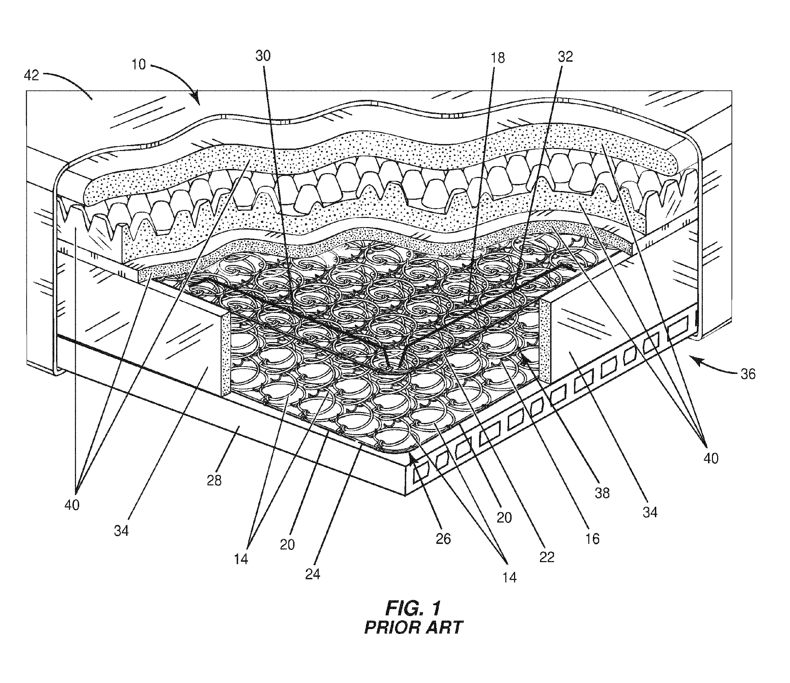

Innerspring assemblies are a type of mattress core utilized for mattresses or seating structures and may be composed of spring coils attached together in a matrix or array. An example of a mattress **10** containing an innerspring assembly **12** ("innerspring **12**") is illustrated in **FIG. 1****.** The innerspring **12** is comprised of conventional coils **14** arranged in an interconnected matrix to form a flexible core and support surfaces of the mattress **10.** Adjacent coils **14** are secured to one another by lower interconnection helical wires **16** and upper interconnection helical wires **18.** At a perimeter **20** of the innerspring **12,** coils **14** are also connected to one another by upper and lower border wires **22, 24.** Upper and lower border wires **22, 24** are attached to upper and lower end turns of the coils **14** to create a frame **26** for the innerspring **12.** The upper and lower border wires **22, 24** may provide firmness for edge support on the perimeter **20** of the innerspring **12** where an individual user may disproportionally place weight on the innerspring **12,** such as during mounting onto and dismounting from the mattress **10.**

With continuing reference to **FIG. 1****,** the innerspring **12** may be disposed on top of a base **28** to provide base support. The base **28** may be comprised of foamed polymer to provide cushioned support for the innerspring **12.** The foamed polymer may be extruded to form the base **28.** In this example, the extruded base **28** extends in an extrusion direction **30** and in a direction **32** transverse to the extrusion direction **30.** To provide further perimeter structure and edge-support for the innerspring **12** in **FIG. 1****,** edge-support members **34** (also referred to as "side-support members **34**") may be disposed around the coils **14** proximate to an edge **30** of the innerspring **12,** between the base **28** and the upper and the lower border wires **22, 24.** The foam side-support members **34** may be extruded from polymer foam, as an example. The foam side-support members **34** are secured to the base **28** to provide an encasement **36** for the innerspring **12.** The foam side-support members **34** being disposed orthogonally to the base **28** to provide the encasement **36** thereby provides an interior area **38** inside the encasement **36** to receive and support the innerspring **12.** The foam side-support members **34** can be secured to the foam base **28** through use of an adhesive or thermal bonding, as non-limiting examples. One or more padding material layer **40** may be disposed on top of the innerspring **12.** Upholstery **42** ("ticking") can then be placed around the padding material layer(s) **40,** innerspring **12,** the foam side-support member **34,** and base **28** to form the mattress **10** in its fully assembled state. The mattress structure in **FIG. 1** may also be provided for other types of innersprings, including pocketed coils.

Certain components of the mattress **10** may be manufactured separately and shipped to secondary manufacturers or assemblers that assemble the entire mattress **10.** It may also be desired to ship components of the mattress **10** to an end user in unassembled form, for the end user to assemble or have the components assembled into the mattress **10.** In either case, it is desirable to find ways to compact the mattress **10** and/or its components to reduce their volume during shipping, thus reducing shipping costs. It may be desired to provide the encasement **36** in assembled form to avoid a secondary manufacturer or assembler, or an end user, from having to engage in the complexity and skill of applying adhesives or thermal bonding to secure the foam side-support members **34** to the base **28.** However, shipping the encasement **36** in assembled form may still be expensive. The foam side-support members **34** of the encasement **36,** being disposed around all edges of the base **28** and secured to each other, do not allow the encasement **36** to be folded to reduce the volume of the interior space **38** of the encasement **36** during shipment.

### SUMMARY OF THE DETAILED DESCRIPTION

Embodiments of the present disclosure include a configurable foam cushioning structure for providing variable support profiles in mattress components, and related mattress assemblies and methods. In one embodiment, an extruded foam cushioning structure for a mattress is provided, including a plurality of extruded support members each having a top surface and a bottom surface that extend in an extrusion direction and two end surfaces that extend in a direction transverse to the extrusion direction. The extruded support members are connected to each other in a linear array defining a substantially planar lower surface, with one end surface of each of the plurality of extruded support members that is substantially coplanar with the lower surface. In this manner, the structure can be easily extruded as one long, continuous piece, i.e., having a relatively long dimension in the extrusion direction and a relatively short dimension in the transverse direction, and reconfigured into a structure having a relatively short dimension in the extrusion direction and a relatively long dimension in the transverse direction.

According to an exemplary embodiment, an extruded foam cushioning structure for a mattress comprises a plurality of extruded support members each having a top surface and a bottom surface that extend in an extrusion direction and two end surfaces that extend in a direction transverse to the extrusion direction. The plurality of extruded support members are connected to each other in a linear array defining a substantially planar lower surface, wherein one end surface of each of the plurality of extruded support members is substantially coplanar with the lower surface.

According to another exemplary embodiment, a method of forming a foam cushioning structure is disclosed. The method comprises providing an extruded foam structure having a top surface and a bottom surface that extend in an extrusion direction and two end surfaces that extend in a direction transverse to the extrusion direction. The method further comprises cutting the extruded foam structure in the transverse direction at a plurality of locations along the extrusion direction of the extruded foam structure to form a plurality of extruded support members each having a top surface and a bottom surface that extend in the extrusion direction and two end surfaces that extend in the transverse direction. The method further comprises arranging the plurality of extruded support members such that the extruded support members are connected to each other in a linear array such one of the end surfaces of each of the plurality of extruded support members are coplanar with each other.

Additional features and advantages will be set forth in the detailed description which follows, and in part will be readily apparent to those skilled in the art from the description or recognized by practicing the embodiments as described in the written description and claims hereof, as well as the appended drawings.

It is to be understood that both the foregoing general description and the following detailed description are merely exemplary, and are intended to provide an overview or framework to understand the nature and character of the claims.

The accompanying drawings are included to provide a further understanding, and are incorporated in and constitute a part of this specification. The drawings illustrate one or more embodiment(s), and together with the description serve to explain principles and operation of the various embodiments.

### BRIEF DESCRIPTION OF FIGURES

**FIG. 1** is a perspective partial cutaway view of a mattress in the prior art including an innerspring disposed in an interior area of an encasement formed from side-support members secured around the edge of a base;
**FIGS. 2A** through **2E** illustrate a flat cushioning structure having cuts and living hinges for rotating adjacent support members 180° with respect to each other in order to reconfigure the dimensions of the structure in the extrusion and transverse directions, according to an exemplary embodiment;
**FIG. 3** illustrates the cushioning structure of **FIGS. 2A** through **2E** folded into a stacked configuration, in which the width of the cushioning structure is halved and the height of the cushioning structure is doubled;
**FIG. 4** illustrates the cushioning structure of **FIGS. 2A** through **2E** folded into an alternative stacked configuration, in which the width of the cushioning structure is quartered and the height of the cushioning structure is quadrupled;
**FIG. 5** illustrates a cushioning structure according to another alternative embodiment having non-uniform distances between cuts and hinges of the support members, such that the resultant folded configuration has a non-uniform shape and support profile;
**FIGS. 6A** through **6C** illustrate a cushioning structure for a chair back support according to an alternative embodiment having non-uniform distances between cuts and hinges of the support members, such that the resultant folded configuration has a non-uniform shape and support profile;
**FIGS. 7A** through **7C** illustrate a cushioning structure having a customized shape and support profile in which non-uniform distances are selected between cuts and hinges of the support members, such that the resultant folded configuration has a non-uniform shape and support profile;
**FIGS. 8A** and **8B** illustrate a plurality of cushioning structures with custom configurations and assembled together into a mattress support assembly having a standard shape profile and a customized support profile;
**FIGS. 9A** through **9D** illustrate a cushioning structure having two different materials connected together prior to cutting and folding the cushioning structure, according to an alternative embodiment;
**FIGS. 10A** through **10D** illustrate a cushioning structure having a plurality of elements of a second material connected to the base support members prior to cutting and folding the cushioning structure, according to an alternative embodiment;
**FIGS. 11A** and **11B** illustrate a comparison of stress profiles at 10% compression for an exemplary extruded support member in the extrusion direction and the transverse direction, according to an exemplary embodiment; and
**FIGS. 12A** and **12B** illustrate a comparison of stress profiles at 50% compression for an exemplary extruded support member in the extrusion direction and the transverse direction similar to the stress profiles of **FIGS. 11A** and **11B****,** according to an exemplary embodiment.

### DETAILED DESCRIPTION

With reference now to the drawing figures, several exemplary embodiments of the present disclosure are described. The word "exemplary" is used herein to mean "serving as an example, instance, or illustration." Any embodiment described herein as "exemplary" is not necessarily to be construed as preferred or advantageous over other embodiments.

Extruded foam members, such as foam members described herein, have significantly different strength in compression properties in the extrusion direction as opposed to in transverse directions. For example, an extruded foam member is significantly stiffer and less susceptible to compression in the extrusion direction. However, exploiting these differences in compressive strength currently involves costly and time consuming manufacturing steps.

Embodiments of the present disclosure include a configurable foam cushioning structure for providing variable support profiles in mattress components, and related mattress assemblies and methods. In one embodiment, an extruded foam cushioning structure for a mattress is provided, including a plurality of extruded support members each having a top surface and a bottom surface that extend in an extrusion direction and two end surfaces that extend in a direction transverse to the extrusion direction. The extruded support members are connected to each other in a linear array defining a substantially planar lower surface, with one end surface of each of the plurality of extruded support members is substantially coplanar with the lower surface. In this manner, the structure can be easily extruded as one long, continuous piece, i.e., having a relatively long dimension in the extrusion direction and a relatively short dimension in the transverse direction, and reconfigured into a structure having a relatively short dimension in the extrusion direction and a relatively long dimension in the transverse direction.

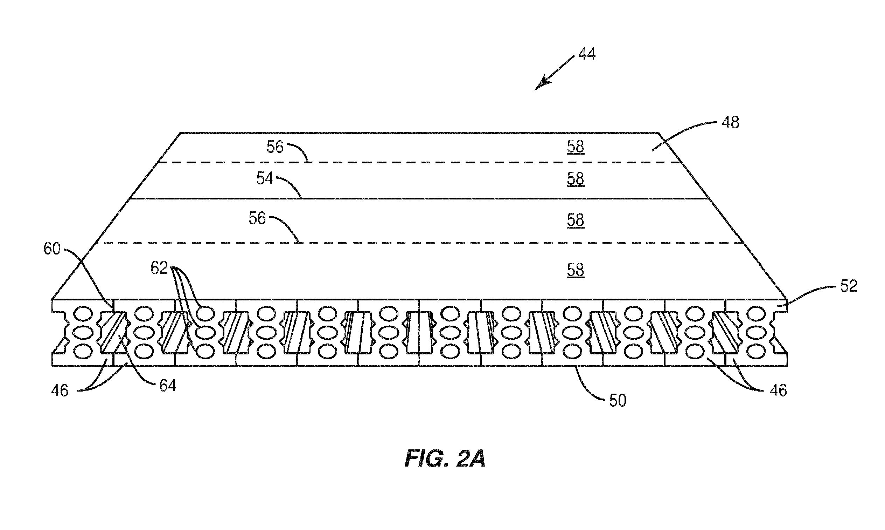

In this regard, **FIGS. 2A** through **2E** illustrate a foam cushioning structure **44** that is able to be reconfigured to change the dimensions and orientation of the structure in the extrusion and transverse directions, according to an exemplary embodiment. The cushioning structure **44** includes a plurality of extruded support sub-members **46** connected in a linear array in a direction transverse to an extrusion direction. The extruded support sub-members **46** together define a top surface **48** and bottom surface **50** extending parallel to the extrusion direction, and the pair of end surfaces **52** extending transverse to the extrusion direction.

The cushioning structure **44** includes a plurality of cuts **54** extending transverse to the extrusion direction. In this embodiment, each alternating cut **54** defines a hinge **56** connecting a pair of extruded support members **58** also defined by the alternating cuts **54.**

The alternating hinges **56** permit each extruded support member **58** to rotate one hundred eighty (180) degrees with respect to each adjacent extruded support member, such that one of the end surfaces **52** of each of the plurality of extruded support members **58** are all coplanar with each other. In this manner, the increased stiffness of the extruded support members **58** in the extrusion direction may be employed for vertical support within a foam cushioning structure **44.** This permits additional versatility for using foam components within a cushioning structure **44** or other support structure.

As noted above, the plurality of extruded support sub-members **46** are arranged in a linear array in the transverse direction to form cushioning structures **44.** Each extruded support sub-member **46** is connected to one or more adjacent extruded support sub-members **46** in the array, for example, by a weld **60** or other connection method, such as an adhesive. The extruded support sub-members **46** may comprise a uniform block of foam, or, as in this example, may define a predetermined foam profile. In this regard, the extruded support sub-members **46** of **FIGS. 2A** through **2E** have an "I-beam" style profile, and also include a plurality of small channels **62** extending therethrough in the extrusion direction. When the individual extruded support sub-members **46** are connected to each other, for example via welds **60,** the connected extruded support sub-members **46** also define a larger channel **64** therebetween. In this manner, a foam structure having sufficient support characteristics may be formed while conserving the amount of foam material used in the extrusion process.

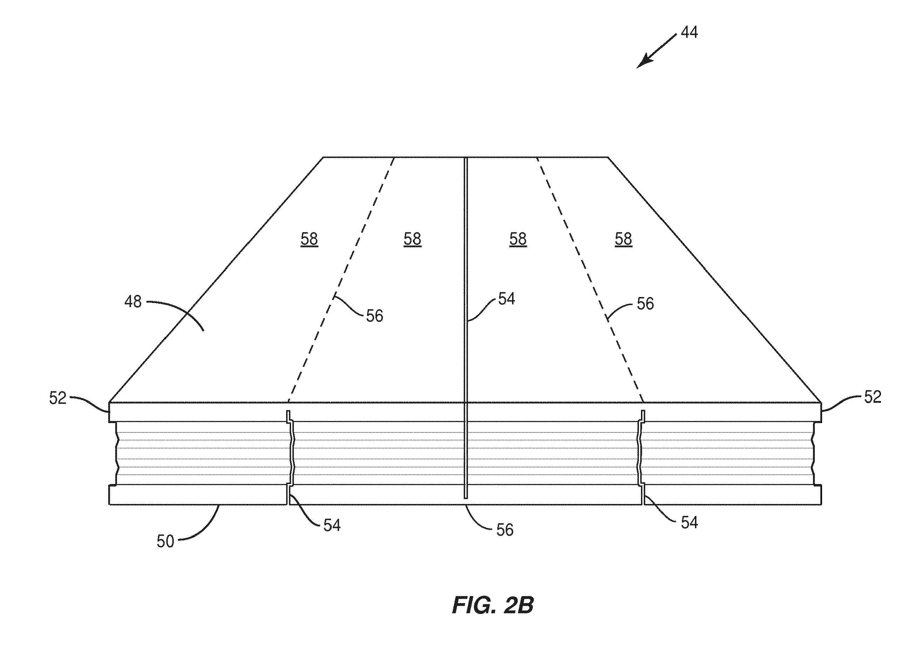

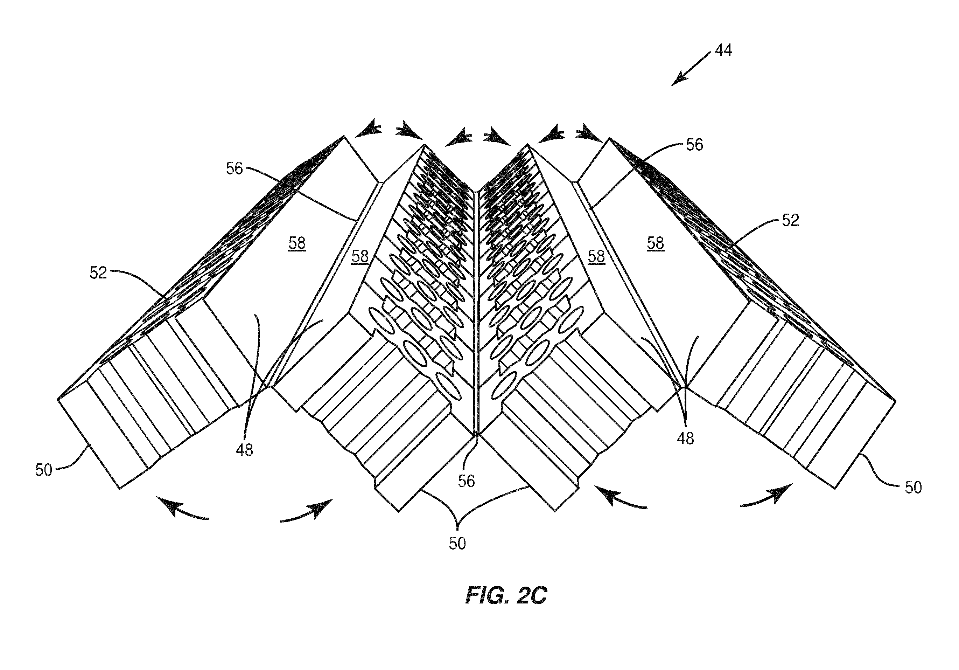

Referring now to **FIG. 2B****,** a side view of cushioning structure **44** is illustrated, showing the alternating cuts **54** and hinges **56** between the extruded support members **58.** As shown in **FIG. 2C****,** each extruded support member **58** can then be located 180° with respect to each adjacent extruded support member **58.**

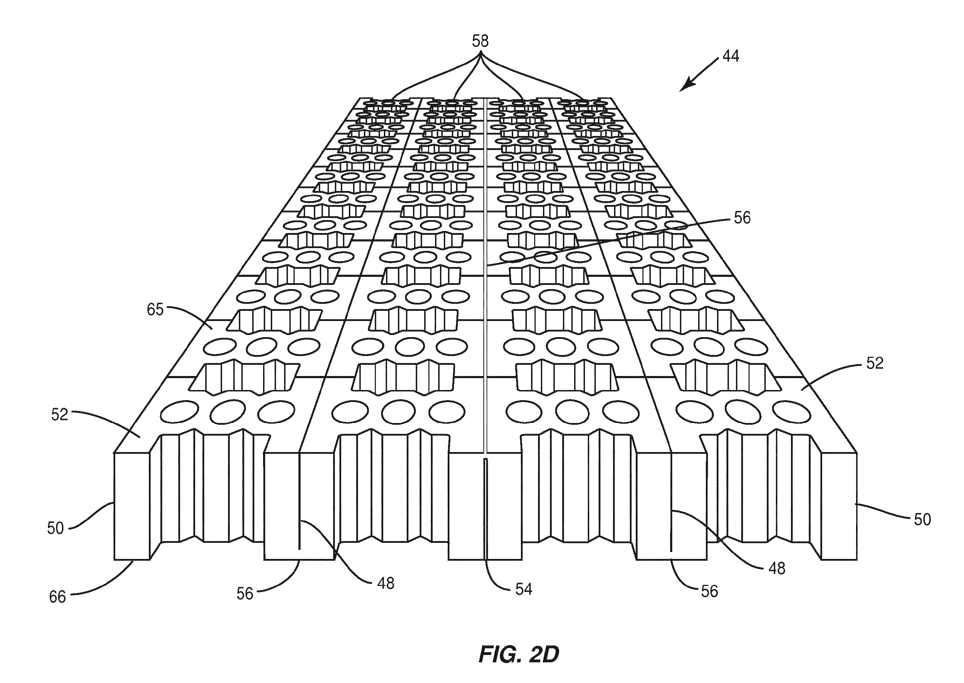

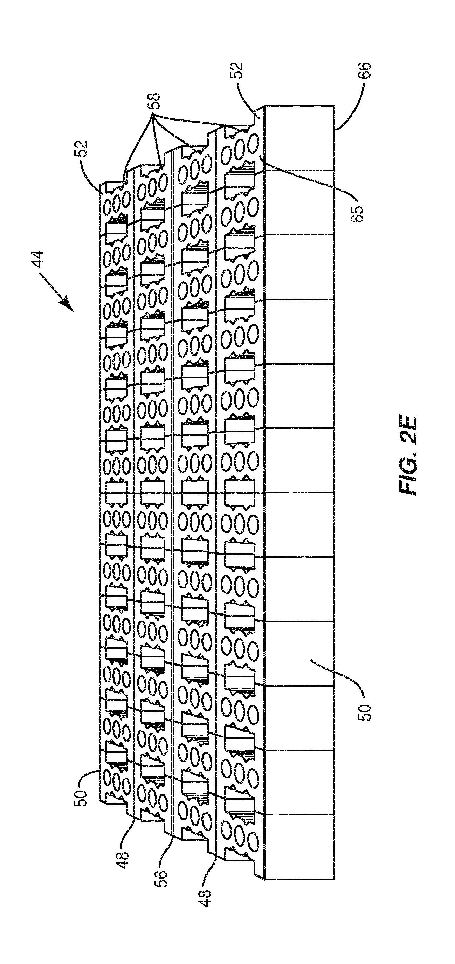

**FIGS. 2D** and **2E** illustrate cushioning structure **44** in an end configuration with each extruded support member **58** arranged in a linear array such that one of the end surfaces **52** of each of the extruded support members **58** are all coplanar with each other. In this configuration, the end surfaces **52** cooperate to define an upper surface **65** and lower surface **66** for the cushioning structure.

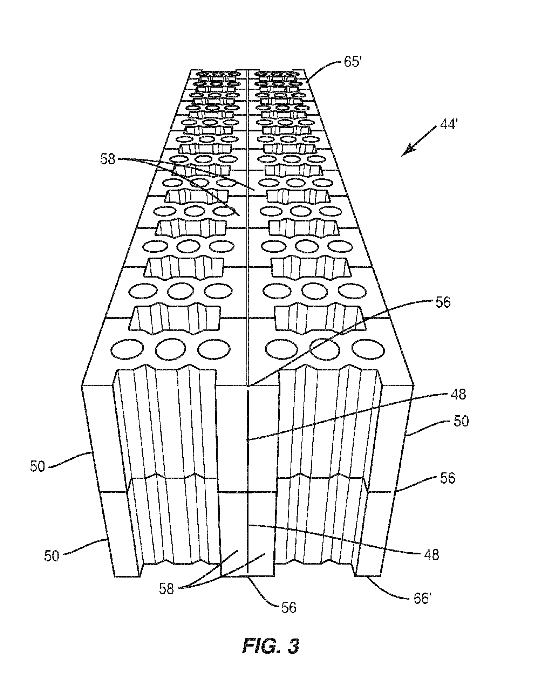

Hinges **56** may also permit different configurations for the cushioning structure **44.** In this regard, **FIG. 3** illustrates the cushioning structure of **FIGS. 2A** through **2E** folded into a stacked configuration, in which the width of the cushioning structure is halved and the height of the cushioning structure is doubled, according to an alternative embodiment. In this embodiment, the extruded support members **58** are rotated 180° with respect to each other, after which half of the cushioning structure **44'** is rotating 180° back with respect to the other half. This configuration defines an upper surface **65'** and lower surface **66'** having a smaller overall area, while the top surfaces **48** and bottom surfaces **50** of the extruded support members define a taller overall cushioning structure **44'.** In this manner, a cushioning structure having a smaller area but increased thickness may be achieved.

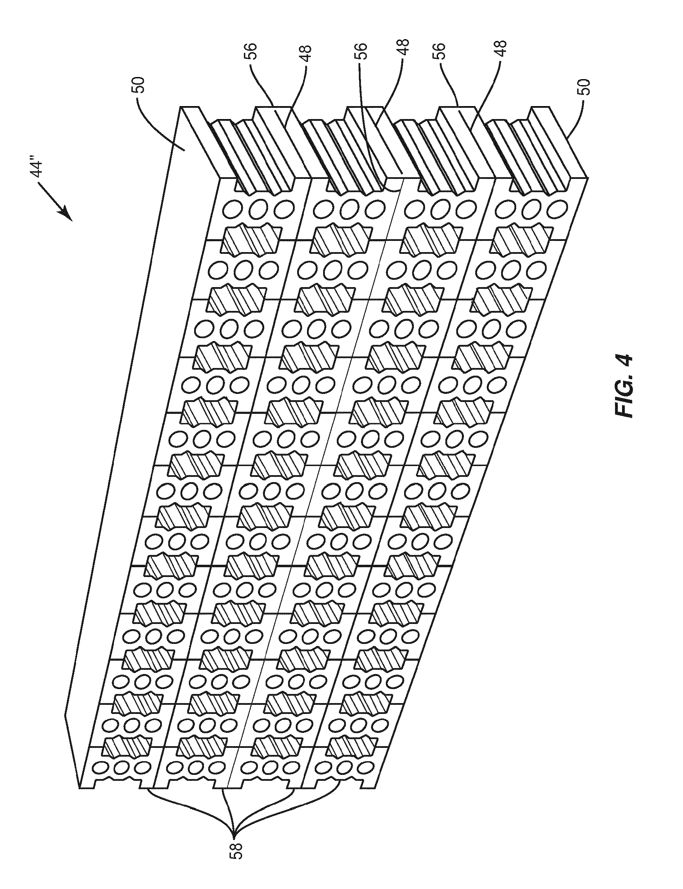

In this regard, **FIG. 4** illustrates the cushioning structure **44** of **FIGS. 2A** through **2E** folded into an alternative stacked configuration, in which the width of the cushioning structure is quartered and the height of the cushioning structure is quadrupled. In this embodiment, the plurality of layers of extruded support members **58** may be stacked vertically, for example to be used as a side support structure in a mattress or other cushioning location.

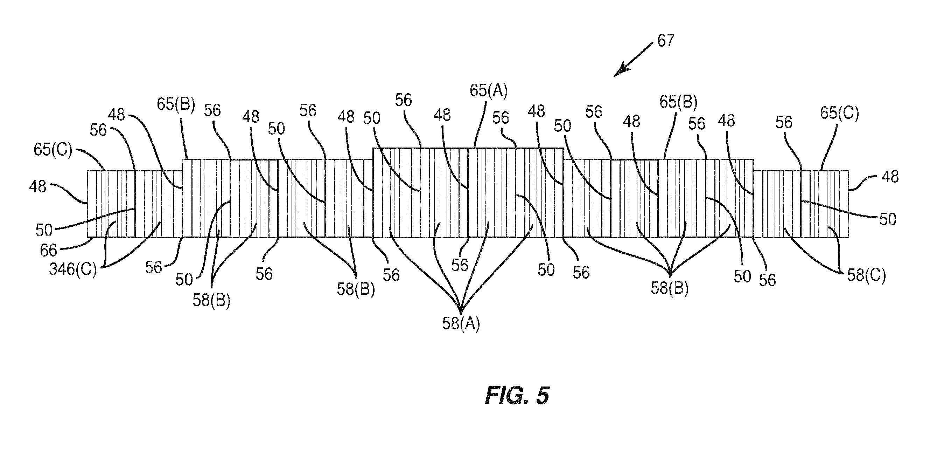

It should be understood that the dimensions of each individual extruded support member **58** need not be uniform. In this regard, **FIG. 5** illustrates a cushioning structure according to another alternative embodiment having non-uniform distances between cuts **54** and hinges **56** of the support members, such that the resultant folded configuration has a non-uniform shape and support profile. In this alternative cushioning structure **67,** the alternating cuts **54** are spaced at differing intervals, thereby defining extruded support members **58** having three (3) different lengths. In this manner, when the extruded support members **58** are rotated 180° with respect to each other, the resulting cushioning structure **67** has a variable height, with a corresponding varying amount of vertical stiffness. For example, extruded support member **58A,** located in the midpoint of cushioning structure **67** in this example, provides additional rigidity due to increased height, while extruded support member **58B** provides an intermediate level of rigidity, and extruded support member **58C** provides a reduced level of rigidity.

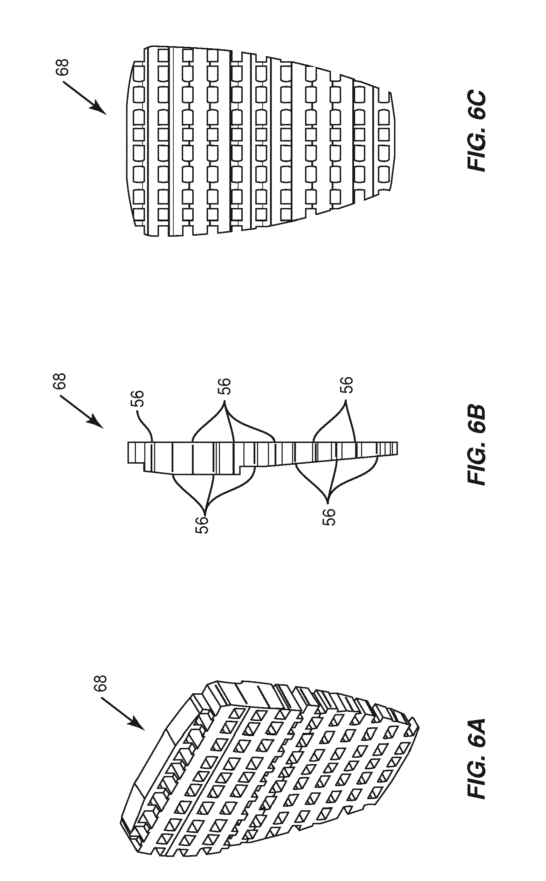

It should also be understood that cushioning structures disclosed herein need not define a rectilinear footprint. In this regard, an alternative cushioning structure **68** is illustrated in which the alternating cuts **54** and hinges **56** define a variable height cushioning structure **68,** for use with a chair, for example. The variable height cushioning structure **68** also has a variable height and width, for example. In this regard, **FIGS. 6A** through **6C** illustrate a cushioning structure for a chair back support according to an alternative embodiment having non-uniform distances between cuts **54** and hinges **56** of the support members, such that the resultant folded configuration has a non-uniform shape and support profile. As illustrated through **FIGS. 6A** through **6C****,** any of the above dimensions may be customized or altered as desired, in order to conform to desired cushioning requirements of a chair or other cushioning application.

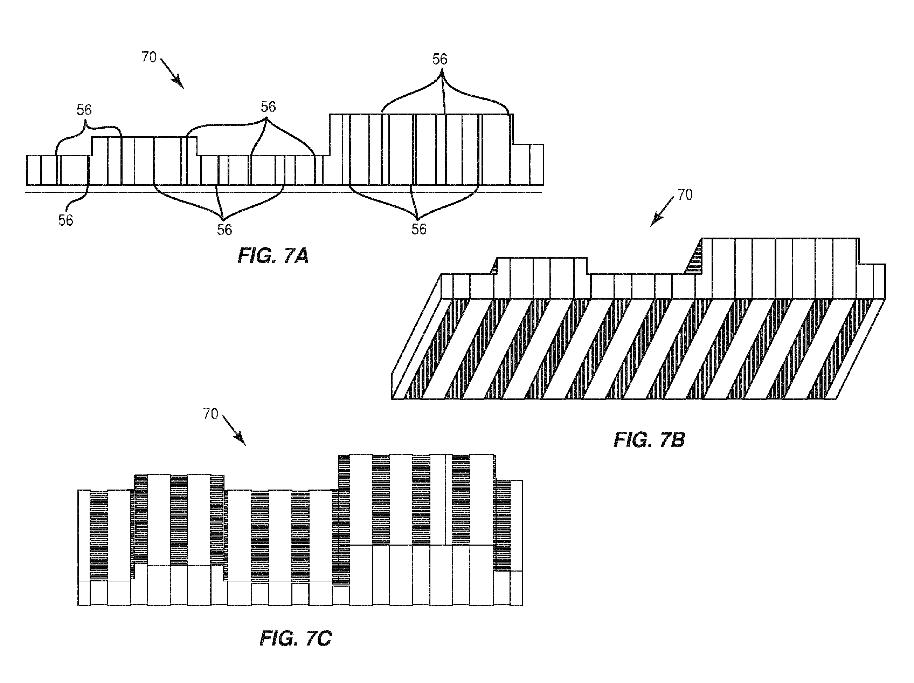

In this regard, **FIGS. 7A** through **7C** illustrate a cushioning structure **70** having a customized shape and support profile in which non-uniform distances are selected between cuts **54** and hinges **56** of the support members **58,** such that the resultant folded configuration has a non-uniform shape and support profile. As a result, the cushioning structure **70** may have portions of varying height, with corresponding varying rigidity. By disposing cushioning structures having different rigidities within the voids defined by the different sections of cushioning structures, a variable cushioning profile may be achieved.

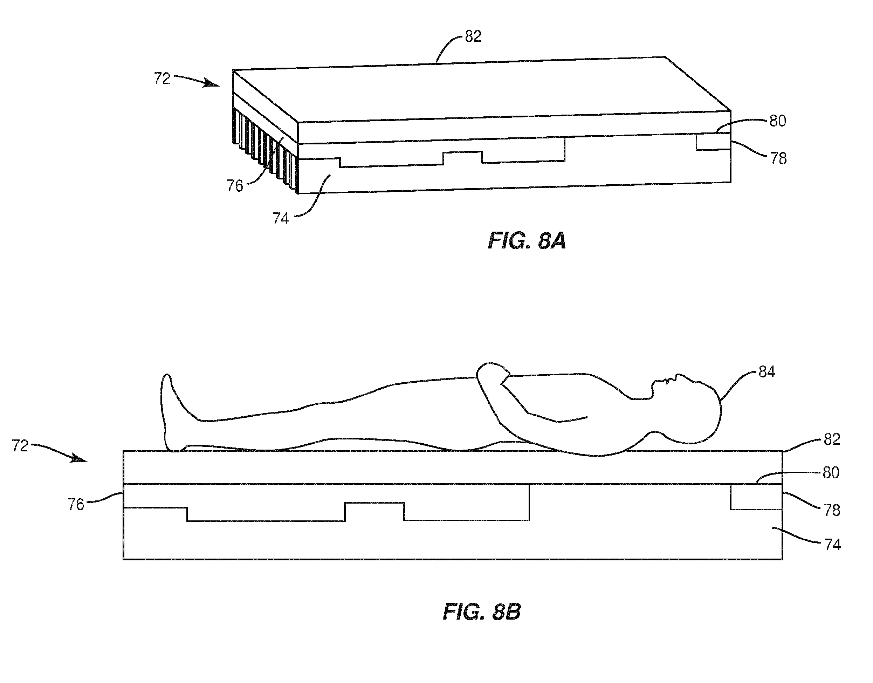

In this regard, **FIGS. 8A** and **8B** illustrate a variable rigidity mattress structure **72** having a plurality of cushioning structures with custom configurations and assembled together into a mattress support assembly having a standard shape profile and a customized support profile. The mattress structure **72** includes a first cushioning structure **74** similar to the cushioning structure **70** of **FIGS. 7A** through **7C****.** Second and third cushioning structures **76, 78** are disposed on top of the recesses formed by first cushioning structure **74** to define a planar support surface **80.** Finally, a uniform cushioning structure **82** is disposed on the planar support surface **80** to define a flat upper surface for the mattress structure **72.** As shown in **FIG. 8B****,** when a user **84** employs the mattress structure 72, different regions of the mattress structure **72** will have different rigidities, due to the variable height of first cushioning structure **74.** In this manner, a customized cushioning profile may be achieved for mattress structure **72.**

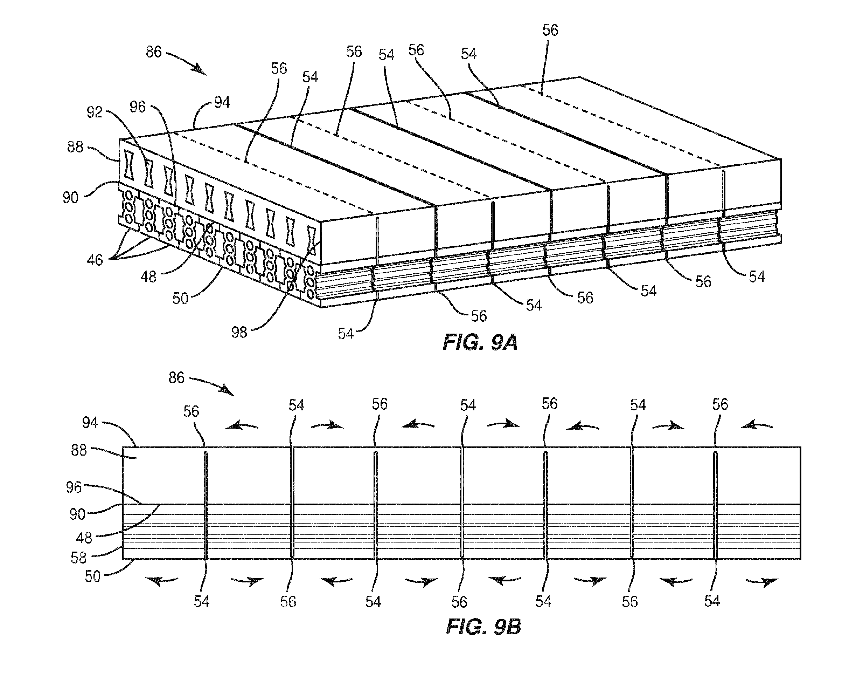

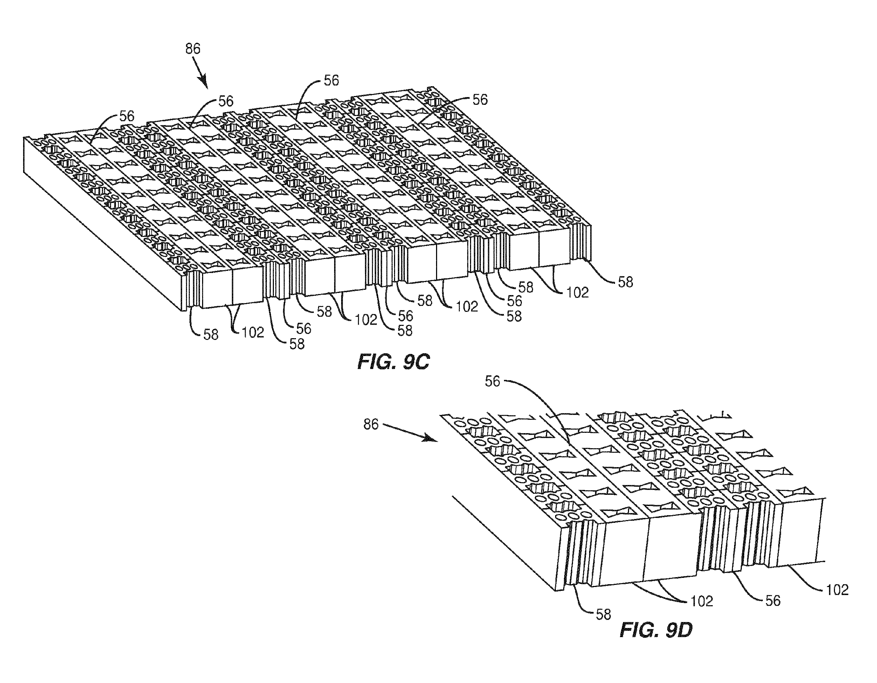

In some embodiments, different materials may be employed to create different cushioning profiles within a uniform cushioning structure. In this regard, **FIGS. 9A** through **9D** illustrate a cushioning structure **86** having two different materials connected together prior to cutting and folding the cushioning structure **86,** according to an alternative embodiment. In the embodiment of **FIGS. 9A** through **9D****,** the cushioning structure **86** includes a second cushioning assembly **88,** such as an array of support member formed of a different material from the material used for extruded support sub-members **46** and/or having a different extrusion profile. As a result, the addition of second assembly **88** prior to cutting and reconfiguring the cushioning structure **86** would combine different mechanical properties in the same cushioning structure **86** while minimizing the extra process steps needed to achieve the modified cushioning structure **86.** For example, in this embodiment, each of the extruded support sub-members **46** is formed from polyethylene, while the second assembly **88** is formed from polyurethane. Different materials may be joined at connection interface **90** by welding, adhesive, or other connection method. It should also be understood that, similar to the extruded support sub-members **46,** the second assembly **88** may also include a predetermined foam profile, such as foam profile **92,** or may be a uniform block of material, as desired.

The second assembly **88** includes a top surface **94,** and a bottom surface **96** extending parallel to the extrusion direction. In this embodiment, the bottom surface **96** of the second assembly **88** is bonded to the top surface **48** of the extruded support sub-members **46** at connection interface **90,** by welding or adhesive for example. In this example, end surface **98** of second assembly **88** is also substantially coplanar with end surface **52** of the extruded support sub-members **46.** When the cushioning structure **86** is rearranged by rotating the individual sections about hinges **56,** the resulting cushioning structure **86** has alternating sections of first and second materials, thereby providing a hybrid cushioning profile for the cushioning assembly **86.**

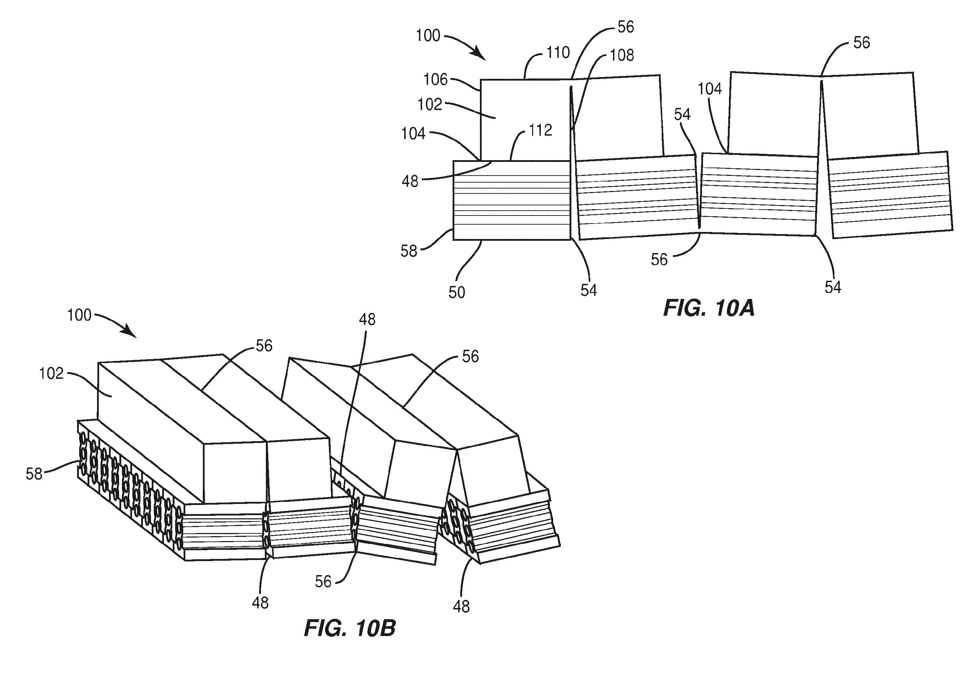

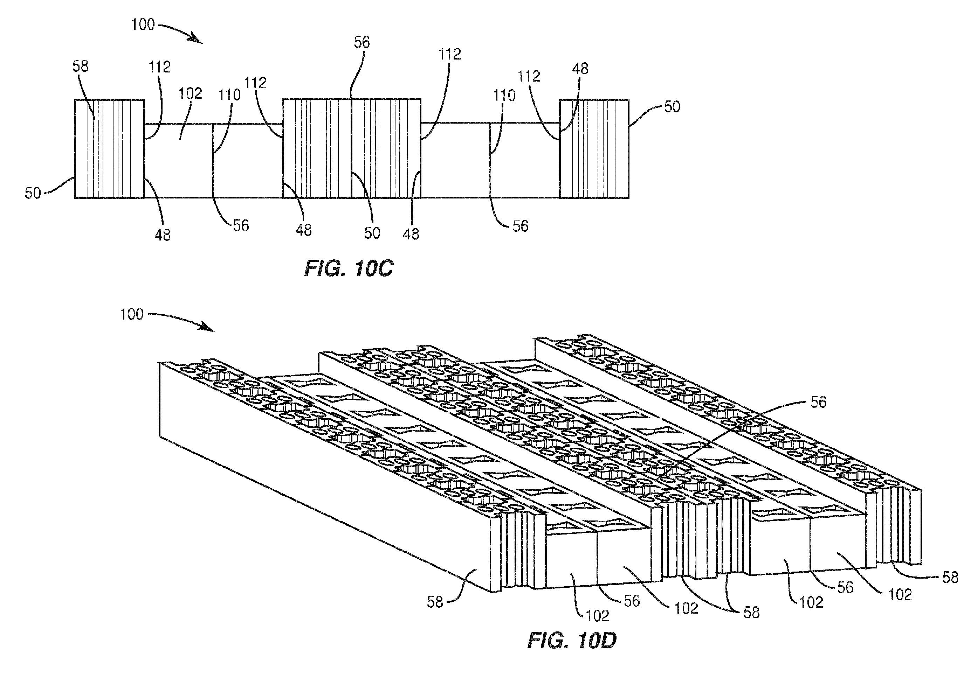

Similar to embodiments described above, it may be desirable to provide a hybrid cushioning structure having different sections of varying height. In this regard, **FIGS. 10A** through **10D** illustrate a cushioning structure **100** having a plurality of elements of a second material connected to the base support members prior to cutting and folding the cushioning structure, according to an alternative embodiment. The alternative cushioning structure **100** of **FIGS. 10A** through **10D** includes individual assemblies **102** of a second material connected to extruded support members **58** at a connection interface **104.** In this embodiment, each assembly **102** has end surfaces **106** that are not necessarily coplanar with end surface **52** of extruded support members **58.** In this embodiment, cuts **54** create cut end surfaces **108** in in the assemblies **102** that are substantially coplanar with cut end surfaces **52** of extruded support members **58,** however. In this manner, when the cushioning structure **100** is rearranged by rotating the individual sections about hinges **56,** the resulting cushioning structure **100** has alternating sections of first and second materials having a coplanar lower surface, but with a non-coplanar upper surface, thereby providing a variable height hybrid cushioning profile for the cushioning assembly **100.** Similar to the cushioning structure **86** of **FIGS. 9A** and **9B****,** each assembly **102** has a top surface **110** and a bottom surface **112,** with the bottom surface **112** of the assembly **102** bonded to the top surface **48** of the extruded support sub-members **46** at connection interface **104,** by welding or adhesive for example.

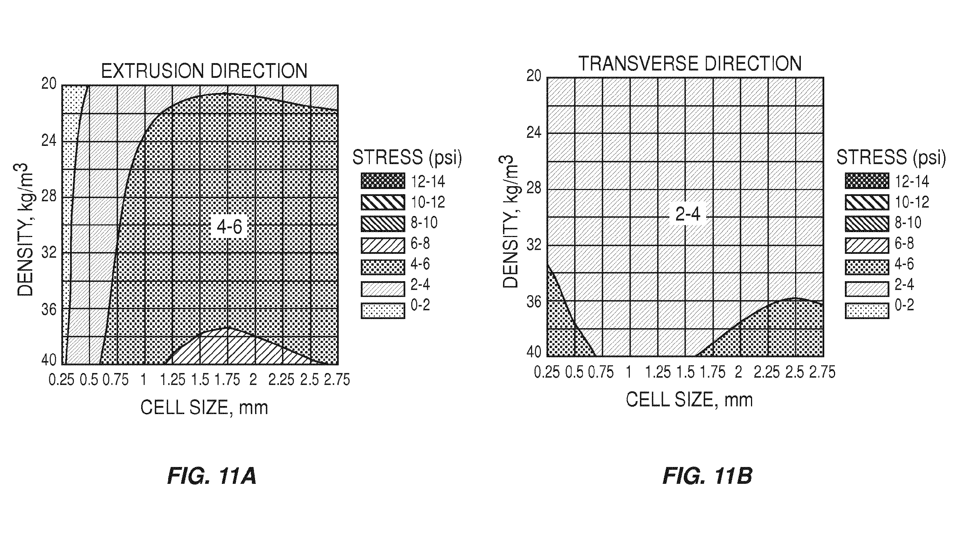

Customization of the support profiles in the above embodiments can also extend to the type and density of foam used in the extruded support sub-members **46** and other components. In this regard, **FIGS. 11A** and **11B** illustrate a comparison of stress profiles at ten percent (10%) compression for an exemplary extruded support member **58** having an extrusion profile according to support sub-members **46** in the extrusion direction and the transverse direction, according to an exemplary embodiment. The stress profiles each comprise a chart of stress across different cell sizes and foam densities. As shown in **FIGS. 11A** and **11B****,** stress in the extrusion direction is in the range of 4-6 psi for most combinations of density and cell size, while stress in the transverse direction is in the range of 2-4 psi for a similar range of densities and cell sizes. Based on this comparison, it can be seen that the extrusion direction is more resistant to compression than the transverse direction.

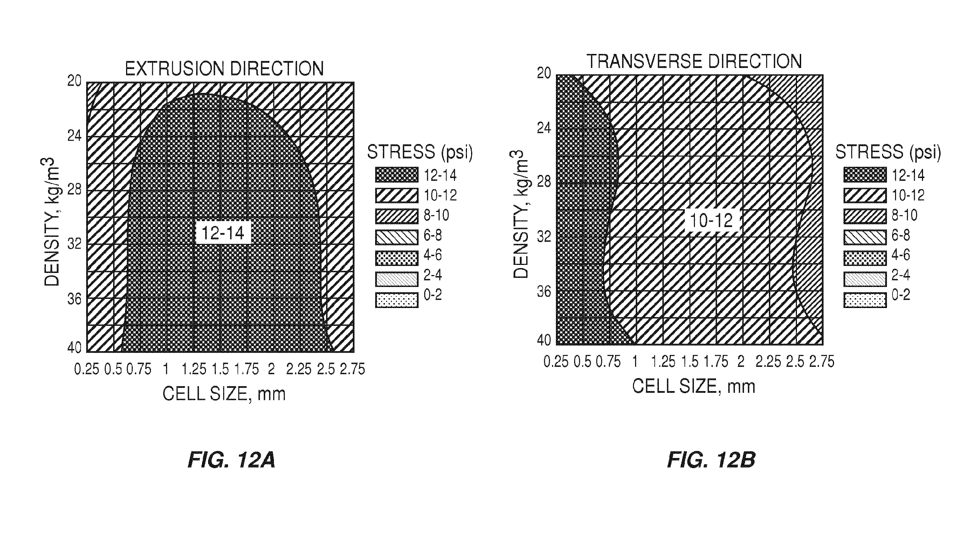

This compression resistance in the extrusion direction is maintained as compression strain increases. In this regard, **FIGS. 12A** and **12B** illustrate a comparison of stress profiles at fifty percent (50%) for an exemplary extruded support member **58** in the extrusion direction and the transverse direction similar to the stress profiles of **FIGS. 11A** and **11B** at a different compression level, according to an exemplary embodiment. At 50% compression, stress in the extrusion direction is 12-14 psi for most cell sizes and densities, while stress in the transverse direction is 10-12 psi for similar cell sizes and densities.

Unless otherwise expressly stated, it is in no way intended that any method set forth herein be construed as requiring that its steps be performed in a specific order. Accordingly, where a method claim does not actually recite an order to be followed by its steps or it is not otherwise specifically stated in the claims or descriptions that the steps are to be limited to a specific order, it is no way intended that any particular order be inferred.

It will be apparent to those skilled in the art that various modifications and variations can be made without departing from the spirit or scope of the invention. Since modifications combinations, sub-combinations and variations of the disclosed embodiments incorporating the spirit and substance of the invention may occur to persons skilled in the art, the invention should be construed to include everything within the scope of the appended claims and their equivalents.

## Claims

1. An extruded foam cushioning structure for a mattress, comprising:
a plurality of extruded support members each having a top surface and a bottom surface that extend in an extrusion direction and two end surfaces that extend in a transverse direction that is transverse to the extrusion direction;
wherein the plurality of extruded support members are connected to each other in a linear array defining a substantially planar lower surface, wherein one end surface of each of the plurality of extruded support members is substantially coplanar with the lower surface.

2. The extruded foam cushioning structure of claim 1, further comprising:
a plurality of hinges connecting each pair of adjacent support members at one of the top surface and the bottom surface of the adjacent support members such that the pair of adjacent support members is able to rotate 180° with respect to each other;
wherein rotating each support members 180° with respect to each of the adjacent support members causes the top surface of each support member to be in contact with the top surface of the adjacent support member, and/or causes the bottom surface of each support member to be in contact with the bottom surface of the adjacent support member; and
wherein rotating each support member 180° with respect to each of the adjacent support members causes one of the end surfaces of each support member to become substantially coplanar with one of the end surfaces of each of the adjacent support member.

3. The extruded foam cushioning structure of claim 1 or 2, wherein each extruded support member comprises a first material that includes the top surface, and a second material from the first material that includes the bottom surface.

4. The extruded foam cushioning structure of any preceding claim, wherein the linear array defines a substantially planar upper surface, wherein one end surface of each of the plurality of extruded support members is substantially coplanar with the upper surface.

5. The extruded foam cushioning structure of any one of claims 1 to 3, wherein the plurality of extruded support members have unequal lengths in the extrusion direction.

6. The extruded foam cushioning structure of any one of claims 1 to 4, wherein the plurality of extruded support members have equal lengths in the extrusion direction.

7. The extruded foam cushioning structure of any preceding claim, wherein each extruded support member comprises a plurality of extruded support sub-members connected to each other in a linear array extending in the transverse direction.

8. The extruded foam cushioning structure of claim 7, wherein each of the plurality of extruded support sub-members has a common cross-sectional foam profile including at least one channel extending therethrough in the extrusion direction.

9. The extruded foam cushioning structure of claim 8, wherein the cross-sectional foam profiles of the plurality of extruded support sub-members cooperate with each other such that connecting the extruded sub-members to each other in the linear array defines at least one enclosed channel extending between adjacent extruded support sub-members in the extrusion direction.

10. The extruded foam cushioning structure of any preceding claim, wherein each of the plurality of extruded support members is stiffer and more resilient in the extrusion direction than in the transverse direction.

11. A method of forming a foam cushioning structure comprising:
providing an extruded foam structure having a top surface and a bottom surface that extend in an extrusion direction and two end surfaces that extend in a transverse direction that is transverse to the extrusion direction;
cutting the extruded foam structure in the transverse direction at a plurality of locations along the extrusion direction of the extruded foam structure to form a plurality of extruded support members each having a top surface and a bottom surface that extend in the extrusion direction and two end surfaces that extend in the transverse direction;
arranging the plurality of extruded support members such that the extruded support members are connected to each other in a linear array such one of the end surfaces of each of the plurality of extruded support members are coplanar with each other.

12. The method of claim 11, wherein cutting the extruded foam structure in the transverse direction at a plurality of locations defines a plurality of hinges connecting each pair of adjacent support members at one of the top surface and the bottom surface of the adjacent support members such that the pair of adjacent support members is able to rotate 180° with respect to each other; and
wherein the plurality of extruded support members comprises rotating each support members 180° with respect to each of the adjacent support members to cause the top surface of each support member to be in contact with the top surface of an adjacent support member, and/or cause the bottom surface of each support member to be in contact with the bottom surface of an adjacent support member, thereby causing one of the end surfaces of each support member to become substantially coplanar with one of the end surfaces of each adjacent support member.

13. The method of claims 11 or 12, wherein each extruded support member comprises a first material that includes the top surface, and a second material from the first material that includes the bottom surface.

14. The method of claims 11, 12 or 13, wherein cutting the extruded foam structure causes the plurality of extruded support members to have unequal lengths in the extrusion direction.

15. The method of claims 11, 12, 13 or 14, wherein the linear array defines a substantially planar upper surface, wherein one end surface of each of the plurality of extruded support members is substantially coplanar with the upper surface.
